# EUROPEAN PATENT SPECIFICATION

(11) **EP 3 470 279 B1**
(45) Date of publication and mention of the grant of the patent: **25.11.2020**
(21) Application number: 18199317.1
(22) Date of filing: 09.10.2018
(51) Int. Cl.: B60T 1/06, B60T 13/74, F16D 65/22, F16D 51/22, F16D 51/00, F16D 121/24, F16D 125/48, F16D 125/60

(54) **ELECTRIC PARKING BRAKE SYSTEM**
ELEKTRISCHES PARKBREMSSYSTEM
SYSTÈME DE FREIN DE STATIONNEMENT ÉLECTRIQUE

(30) Priority: 10.10.2017 JP 2017196793
(43) Date of publication of application: 17.04.2019
(73) Proprietor: Nissin Kogyo Co., Ltd., Tomi-city Nagano 389-0514 (JP)
(72) Inventor: Usui, Koji, Nagano (JP)
(74) Representative: Hoffmann Eitle

(56) References cited:
- JP-A- 2000 170 806
- JP-A- 2014 504 711
- KR-A- 20130 123 791

## Description

### BACKGROUND

### 1. Technical Field

The present invention relates to an electric parking brake system in which an actuator case of an electric actuator configured to drive a parking brake lever to thereby obtain a parking brake state is mounted to a back plate of a drum brake having the parking brake lever.

### 2. Background art

For example, JP-A-2014-58994 and JP-A-2014-504711 disclose an electric parking brake system in which an actuator case of an electric actuator configured to obtain a parking brake state is mounted to a back plate of a drum brake.

In the electric parking brake system disclosed in JP-A-2014-58994 and JP-A-2014-504711, the actuator case of the electric actuator is mounted to the back plate of the drum brake by bolt fastening, so that the man-hour to mount the actuator case to the back plate increases.

KR-A-2013 0123791 discloses an electric parking brake system according to the preamble of claim 1.

JP-A-2000-170806 relates to another electrically driven brake device for vehicles.

### SUMMARY

The present invention has been made in view of the above situations, and an object thereof is to provide an electric parking brake system in which an actuator case of an electric actuator can be easily mounted to a back plate with a simple mounting structure capable of decreasing the mounting man-hour.

In order to achieve the object, according to the first feature of the invention, there is provided an electric parking brake system in which an actuator case of an electric actuator configured to drive a parking brake lever to thereby obtain a parking brake state is mounted to a back plate of a drum brake including the parking brake lever, wherein a cylinder part configuring a part of the actuator case is inserted in a mounting cylinder part provided to the back plate and is engaged to the mounting cylinder part with axial movement thereof being restrained, one of the mounting cylinder part and the actuator case is formed with an engagement concave part arranged around a central axis of the mounting cylinder part, and the other of the mounting cylinder part and the actuator case is formed with an engagement part engaged with the engagement concave part.

In the meantime, a second cylinder part 46 of an illustrative embodiment corresponds to the cylinder part of the present invention.

According to the present invention, the cylinder part, which is a part of the actuator case of the electric actuator, is inserted in the mounting cylinder part of the back plate and is engaged to the mounting cylinder part with axial movement thereof being restrained, and the engagement concave part formed at one of the mounting cylinder part and the actuator case with being arranged around the central axis of the mounting cylinder part is engaged with the engagement part formed at the other of the mounting cylinder part and the actuator case. Therefore, it is possible to increase the mountability of the actuator case to the back plate while restraining the axial movement of the actuator case relative to the mounting cylinder part and the rotation of the actuator case relative to the mounting cylinder part by the simple structure with the smaller number of components.

### BRIEF DESCRIPTION OF THE DRAWINGS

FIG. 1 is a front view of a drum brake.
FIG. 2 is a sectional view taken along a line 2-2 of FIG. 1.
FIG. 3 is a perspective view as seen from an arrow 3 direction of FIG. 1.
FIG. 4 is a sectional view taken along a line 4-4 of FIG. 3, in a state where a brake cable is loosened.
FIG. 5 is a sectional view corresponding to FIG. 4, in a state where the brake cable is pulled.
FIG. 6 is a perspective view of an electric actuator.
FIG. 7 is an exploded perspective view of the drum brake and the electric actuator.
FIG. 8 is a sectional view taken along a line 8-8 of FIG. 2.

### DETAILED DESCRIPTION OF EXEMPLARY EMBODIMENTS

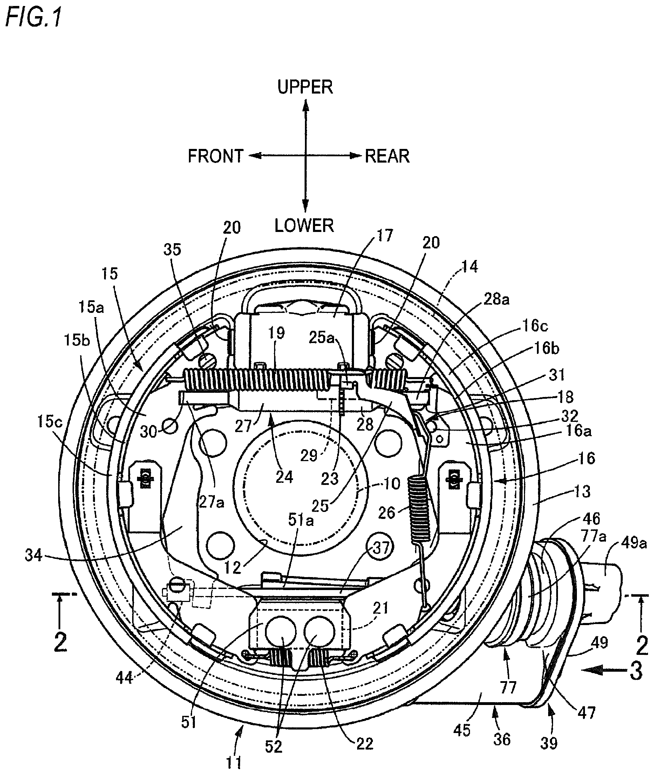

An illustrative embodiment of the present invention will be described with reference to FIGS. 1 to 8. First, in FIGS. 1 to 3, for example, a left rear wheel of a four-wheeled vehicle is provided with a drum brake 11. The drum brake 11 includes a fixed back plate 13 having a through-hole 12, in which an axle 10 of the left rear wheel is to be inserted, formed at a central part, first and second brake shoes 15, 16 arranged inside the back plate 13 to be slidably contactable to an inner periphery of a brake drum 14 configured to rotate together with the left rear wheel, a wheel cylinder 17 fixed to an upper part of the back plate 13 so as to apply a force of enlarging the first and second brake shoes 15, 16, a braking gap automatic adjustment means (a so-called automatic adjuster) 18 for automatically adjusting gaps between the first and second brake shoes 15, 16 and the brake drum 14, and a return spring 19 provided between the first and second brake shoes 15, 16.

The first and second brake shoes 15, 16 are configured by arch webs 15a, 16a conforming to the inner periphery of the brake drum 14, rims 15b, 16b provided consecutively so as to be perpendicular to outer peripheries of the webs 15a, 16a, and linings 15c, 16c bonded to outer peripheries of the rims 15b, 16b.

Outer end portions of a pair of pistons 20 provided to the wheel cylinder 17 are arranged to face the webs 15a, 16a at upper end portions of the first and second brake shoes 15, 16. Also, an anchor block 21, which is a support point when the first and second brake shoes 15, 16 are enlarged and contracted, is fixed to a lower part of the back plate 13 with supporting one end portions (in the illustrative embodiment, lower end portions) of the first and second brake shoes 15, 16. The wheel cylinder 17 is configured to operate by an output liquid pressure of a master cylinder (not shown), which is to be operated by a brake pedal, thereby applying a force of enlarging the first and second brake shoes 15, 16 about the anchor block 21, which is a support point.

A coil spring 22 for urging lower end portions of the webs 15a, 16a toward the anchor block 21 is provided between the lower end portions of the webs 15a, 16a of the first and second brake shoes 15, 16, and the return spring 19 for urging the first and second brake shoes 15, 16 in a contraction direction is provided between upper end portions of the webs 15a, 16a of the first and second brake shoes 15, 16.

The braking gap automatic adjustment means 18 includes a contraction position restraint strut 24 provided between the webs 15a, 16a of the first and second brake shoes 15, 16 and capable of extending as a result of rotation of an adjusting gear 23, an adjusting lever 25 having a feed claw 25a to be engaged with the adjusting gear 23 and rotatably supported to the web 16a of the second brake shoe 16, which is one brake shoe of the first and second brake shoes 15, 16, and an adjusting spring 26 for rotatively urging the adjusting lever 25 toward a side of rotating the adjusting gear 23 in a direction of extending the contraction position restraint strut 24.

The contraction position restraint strut 24 is to restrain contraction positions of the first and second brake shoes 15, 16, and includes a first rod 27 having a first engagement part 27a, which is to be engaged to an upper part of the web 15a of the first brake shoe 15 of the first and second brake shoes 15, 16, a second rod 28 having a second engagement part 28a, which is to be engaged to an upper part of the web 16a of the second brake shoe 16, and arranged coaxially with the first rod 27, and an adjusting bolt 29 having one end portion inserted in the first rod 27 so as to be relatively moveable in an axial direction and the other end portion coaxially screwed to the second rod 28. The adjusting gear 23 is arranged between the first and second rods 27, 28 and is formed on an outer periphery of the adjusting bolt 29.

The upper part of the web 15a of the first brake shoe 15 is provided with a first engagement concave part 30 to which the first engagement part 27a is to be engaged, and the upper part of the web 16a of the second brake shoe 16 is provided with a second engagement concave part 31 to which the second engagement part 28a is to be engaged.

The adjusting lever 25 having the feed claw 25a to be engaged to the adjusting gear 23 is rotatably supported to the web 16a of the second brake shoe 16 via a support shaft 32, and the adjusting spring 26 is provided between the web 16a of the second brake shoe 16 and the adjusting lever 25. Further, a spring force of the adjusting spring 26 is set lower than a spring force of the return spring 19.

According to the braking gap automatic adjustment means 18, while the first and second brake shoes 15, 16 are enlarged as a result of an operation of the wheel cylinder 17, when the brake shoes are enlarged above a predetermined value due to wears of the linings 15c, 16c, the adjusting lever 25 is rotated about an axis of the support shaft 32 by the spring force of the adjusting spring 26. Thereby, an effective length of the contraction position restraint strut 24 is incrementally corrected in correspondence to the rotation of the adjusting gear 23.

The drum brake 11 includes a parking brake lever 34 having one end portion, which is rotatably supported to the web 15a of the first brake shoe 15 of the first and second brake shoes 15, 16, and engaged to one end portion of the contraction position restraint strut 24.

The parking brake lever 34 vertically extends with partially overlapping the web 15a of the first brake shoe 15, as seen from the front. An upper end portion of the parking brake lever 34 is coupled to the upper part of the web 15a of the first brake shoe 15 via a pin 35, and the first engagement part 27a of the contraction position restraint strut 24 is engaged to an upper part of the parking brake lever 34.

When a parking brake of a vehicle operates, the parking brake lever 34 is rotatively driven in a counterclockwise direction of FIG. 1 about the pin 35, which is a support point. As the parking brake lever 34 rotates, a force of bringing the lining 16c of the second brake shoe 16 into pressure-contact with the inner periphery of the brake drum 14 is applied to the second brake shoe 16 via the contraction position restraint strut 24. Also, when the parking brake lever 34 is further rotatively driven in the counterclockwise direction of FIG. 1, the parking brake lever 34 is rotated about an engaging point with the first engagement part 27a of the contraction position restraint strut 24, which is a support point, and the first brake shoe 16 is enlarged via the pin 35, so that the lining 15c of the first brake shoe 15 is pressure-contacted to the inner periphery of the brake drum 14. That is, the parking brake lever 34 is operated to an operating position at which the linings 15c, 16c of the first and second brake shoes 15, 16 are pressure-contacted to the inner periphery of the brake drum 14, and in this state, a parking brake state is obtained.

When the applying of the rotating driving force to the parking brake lever 34 is stopped, the parking brake lever 34 returns to a non-operating position, together with the first and second brake shoes 15, 16 being operated in a direction of separating from the inner periphery of the brake drum 14 by the spring force of the return spring 19, and the parking brake lever 34 is urged toward the non-operating position.

The parking brake lever 34 is configured to be rotatively driven by power to be fed from an electric actuator 36. A brake cable 37 that is to be pulled by the electric actuator 36 is configured to rotatively drive the parking brake lever 34 so as to pressurize the contraction position restraint strut 24 to the web 15a of the second brake shoe 15 as a result of the pulling of the brake cable 37 and to thereby obtain the parking brake state, and is connected to a lower part of the parking brake lever 34.

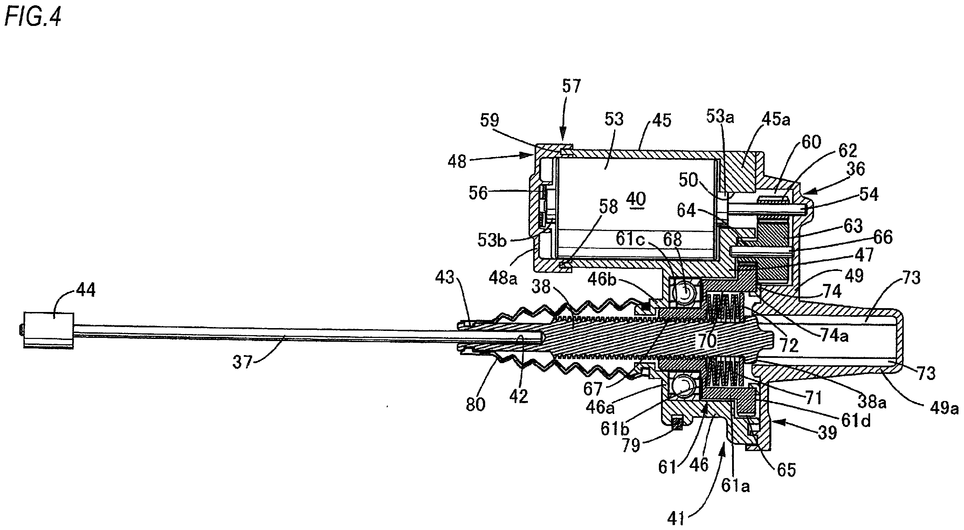

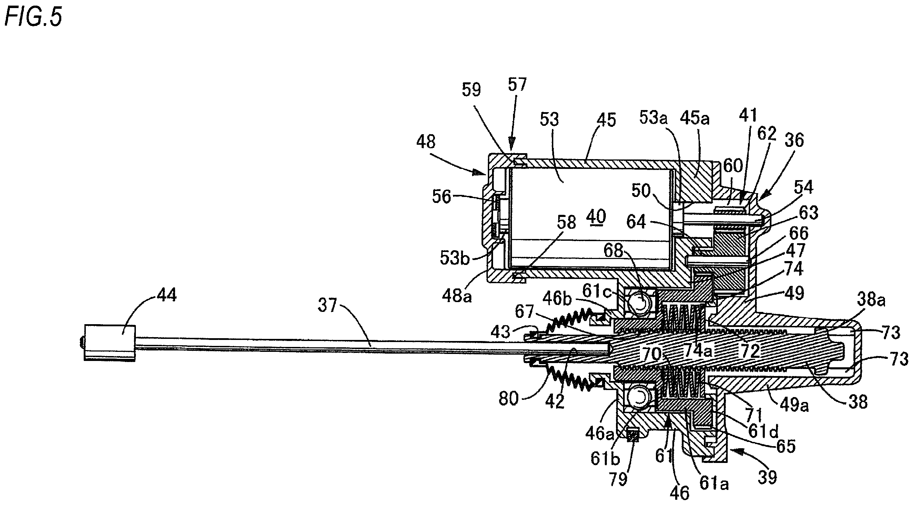

Referring to FIGS. 4 and 5, the electric actuator 36 includes a screw shaft 38 coupled to the brake cable 37, an actuator case 39 configured to support the screw shaft 38 such that the screw shaft 38 is reciprocally moveable in an axis direction while restraining rotation of the screw shaft, an electric motor 40 supported to the actuator case 39 so as to be rotatable in forward and backward directions, and a movement conversion mechanism 41 configured to convert rotary movement to be generated from the electric motor 40 into linear movement of the screw shaft 38 and accommodated in the actuator case 39 with being provided between the electric motor 40 and the screw shaft 38.

An end portion of the screw shaft 38 facing toward the brake cable 37 is coaxially formed with a bottomed coupling hole 42, and an end portion of the brake cable 37 facing toward the electric actuator 36 is inserted in the coupling hole 42. Further, an outer periphery of the screw shaft 38 is formed with an annular groove 43 in the vicinity of an opening end of the coupling hole 42. The annular groove 43 is crimped so that a part of the screw shaft 38 is to bite the brake cable 37 in a state where the brake cable 37 is inserted in the coupling hole 42, so that the screw shaft 38 is coupled to the brake cable 37.

The brake cable 37 is pulled into the back plate 13 from the electric actuator 36 mounted to the back plate 13. An engaging piece 44 to be fixed to the other end portion of the brake cable 37 is engaged to a lower end portion of the parking brake lever 34.

The electric actuator 36 is configured to switch a state in which the screw shaft 38 is to be moved in a direction of pulling the brake cable 37 so as to drive the parking brake lever 34 toward the operating position, as shown in FIG. 5, and a state in which the screw shaft 38 is to be moved in a direction of loosening the brake cable 37 so as to return the parking brake lever 34 from the operating position to the non-operating position, as shown in FIG. 4, by changing a rotating direction of the electric motor 40.

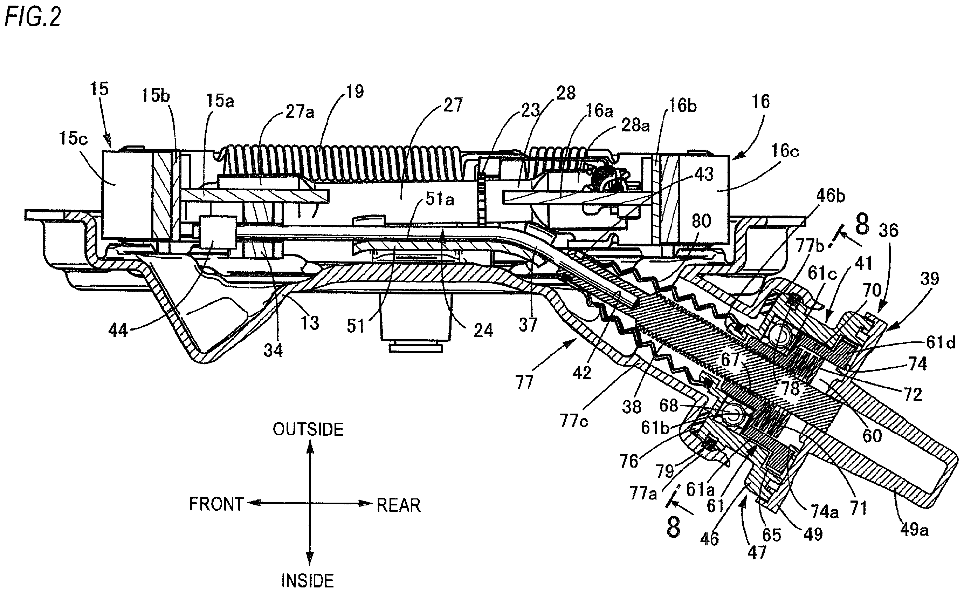

A cable guide 51 for sandwiching the anchor block 21 between the cable guide and a lower part of the back plate 13 is mounted to the lower part of the back plate 13 by a pair of rivets 52. As clearly shown in FIG. 2, the cable guide 51 is provided integrally with a guide part 51a configured to guide the brake cable 37 and having a substantially U-shaped cross section.

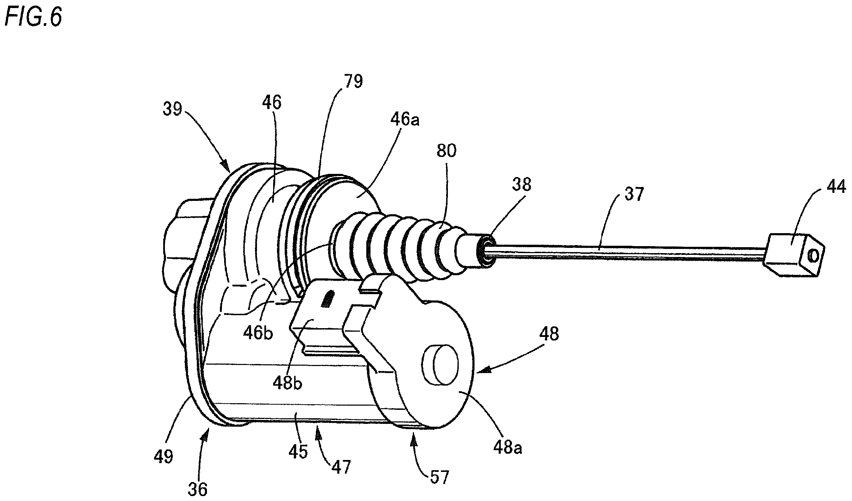

Referring to FIG. 6, the actuator case 39 includes a case main body 47 having first and second integrated cylinder parts 45, 46, a first cover member 48 joined to an opening end of the first cylinder part 45, and a second cover member 49 joined to the case main body 47 from an opposite side to the first cover member 48.

The first cylinder part 45 has a bottomed circular cylinder shape having a first end wall part 45a provided at one end portion, and a fitting hole 50 is coaxially formed at a central portion of the first end wall part 45a. The second cylinder part 46 is arranged at a side of the first cylinder part 45 and has a bottomed circular cylinder shape having one opened end portion and the other end portion closed by a second end wall part 46a arranged at a longitudinally intermediate portion of the first cylinder part 45, and a support cylinder part 46b, which the screw shaft 38 is to be inserted therethrough and has a diameter smaller than the second cylinder part 46, protrudes integrally from a central portion of the second end wall part 46a.

A circular cylinder-shaped first bearing part 53a configured to rotatably support a motor shaft 54 protrudes from one axial end portion of a motor case 53 of the electric motor 40. One end portion of the motor shaft 54 protrudes from one end portion of the motor case 53 through the first bearing part 53a, and a bottomed circular cylinder-shaped second bearing part 53b configured to rotatably support the other end portion of the motor shaft 54 protrudes from the other axial end portion of the motor case 53.

The electric motor 40 is accommodated in the first cylinder part 45 with the first bearing part 53a being fitted in the fitting hole 50 of the case main body 47 and one end portion of the motor case 53 being in contact with the first end wall part 45a. The electric motor 40 is accommodated in the first cylinder part 45 in a state where a part of the electric motor 40, in the illustrative embodiment, the other end portion of the motor case 53 at a side at which the second bearing part 53b is provided faces outward.

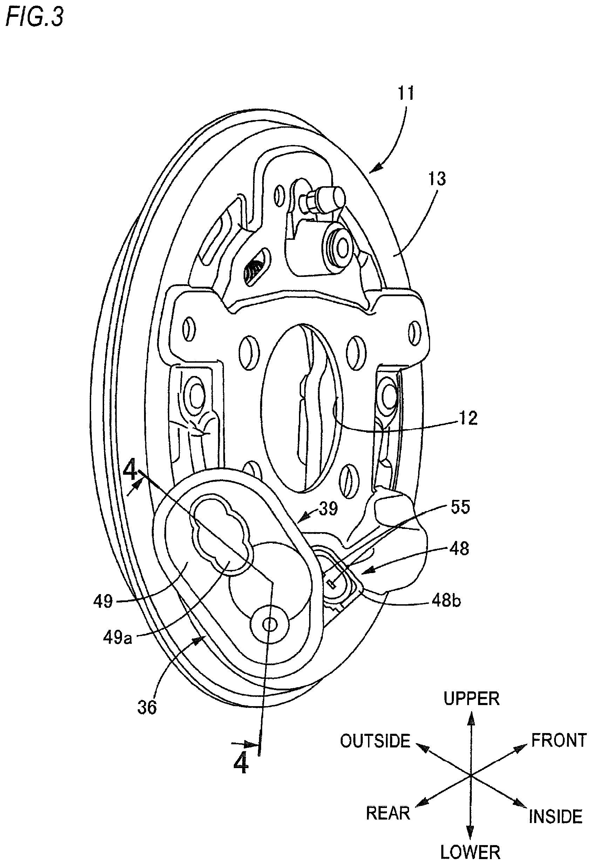

The first cover member 48 integrally has a cover part 48a configured to cover the part, which faces outward from the first cylinder part 45, of the electric motor 40 accommodated in the first cylinder part 45 and joined to the opening end of the first cylinder part 45, and a connector part 48b arranged at a side of the first cylinder part 45 and protruding laterally from the cover part 48a with terminals 55 (refer to FIG. 3) continuing to the electric motor 40 being arranged thereon, and a wave washer 56 is provided between the second bearing part 53b of the electric motor 40 and the cover part 48a.

Further, the first cover member 48 is joined to the first cylinder part 45 so that a circumferential relative position of the connector part 48b to the first cylinder part 45 can be arbitrarily selected at least at a plurality of positions around an axis of the first cylinder part 45. The first cylinder part 45 and a joining part 57 of the cover part 48a are formed to have a circular or regular polygonal cross section and are joined by bonding or welding.

The cover part 48a has a dish shape opening toward the first cylinder part 45, and an opening end of the cover part 48a is formed with an annular concave part 58 coaxial with the first cylinder part 45 having a circular cross section. In the meantime, a ring-shaped fitting protrusion 59 to be fitted to the annular concave part 58 protrudes from the opening end portion of the first cylinder part 45, and the joining part 57 is configured by the cover part 48a and the first cylinder part 45 bonded to each other with the fitting protrusion 59 being fitted to the annular concave part 58, and has a circular cross section.

The second cover member 49 is joined to the case main body 47 so that a gear chamber 60 is formed between the second cover member 49 and the case main body 47. Upon the joining, the second cover member 49 may be joined to the case main body 47 by bonding or welding.

The movement conversion mechanism 41 includes a drive gear 62 provided to the motor shaft 54 of the electric motor 40, an intermediate large-diameter gear 63 configured to mesh with the drive gear 62, an intermediate small-diameter gear 64 configured to rotate together with the intermediate large-diameter gear 63, a nut 61 to be screwed to the screw shaft 38, and a driven gear 65 provided to the nut 61 and configured to mesh with the intermediate small-diameter gear 64, and is accommodated in the gear chamber 60.

The intermediate large-diameter gear 63 and the intermediate small-diameter gear 64 are integrally formed, and are rotatably supported by a support shaft 66 parallel with the motor shaft 54 and the screw shaft 38. Also, both end portions of the support shaft 66 are supported by the case main body 47 and the second cover member 49.

The nut 61 integrally has a large-diameter circular cylinder part 61a rotatably accommodated in the second cylinder part 46, an inward collar part 61b protruding radially inward from an opposite end portion of the large-diameter circular cylinder part 61a to the second cover member 49, a small-diameter circular cylinder part 61c continuing to an inner peripheral edge of the inward collar part 61b, extending in an opposite side to the second cover member 49 and penetrating the screw shaft 38, and an outward collar part 61d protruding radially outward from an end portion of the large-diameter circular cylinder part 61a facing toward the second cover member 49. An inner periphery of the small-diameter circular cylinder part 61c is formed with a female screw 67 to be screwed to the screw shaft 38, and an outer periphery of the outward collar part 61d is formed with the driven gear 65. Also, a ball bearing 68 is mounted between the small-diameter circular cylinder part 61c and an end portion of the second cylinder part 46 facing toward the second end wall part 46a.

At an opposite side to the brake cable 37, an end portion of the screw shaft 38 is provided with a flange part 38a radially outward. In the meantime, the nut 61 is formed with a concave part 70, which is defined by the large-diameter circular cylinder part 61a and inward collar part 61b of the nut 61 so as to open toward the flange part 38a.

The screw shaft 38 is configured so that when pulling the brake cable 37 so as to drive the parking brake lever 34 to the operating position, the flange part 38a is moved to separate from the nut 61, as shown in FIG. 5, and when loosening the brake cable 37 so as to return the parking brake lever 34 from the operating position to the non-operating position, the flange part 38a is moved to come close to the nut 61, as shown in FIG. 4. A plurality of disc springs 71, which is configured to be interposed between the flange part 38a and the nut 61 and to apply a resilient force of urging the flange part 38a in the direction of separating from the nut 61 upon the movement of the screw shaft 38 in the direction in which the brake cable 37 is to be loosened, is accommodated in the concave part 70.

In the concave part 70, the plurality of disc springs 71 and a circular disc-shaped retainer 72 configured to sandwich the disc springs 71 between the retainer and the inward collar part 61b of the nut 61 are accommodated.

The flange part 38a is formed to protrude radially outward in both directions from the screw shaft 38 along one diameter line of the screw shaft 38. In the meantime, the second cover member 49 of the actuator case 39 is integrally formed with a bottomed circular cylinder-shaped guide cylinder part 49a configured to surround the screw shaft 38, and an inner surface of the guide cylinder part 49a is formed with a pair of locking grooves 73 extending along the axis of the screw shaft 38 and configured to slidably engage the flange part 38a thereto.

A bearing member 74 to which a thrust load is to be applied from the nut 61 is mounted between an opening end portion of the guide cylinder part 49a and the nut 61. The bearing member 74 integrally has a short circular cylinder part 74a that is to enter the concave part 70.

Here, as shown in FIG. 5, when pulling the brake cable 37 so as to drive the parking brake lever 34 from the non-operating position to the operating position, an outer periphery of the retainer 72 is contacted to the short circular cylinder part 74a of the bearing member 74, so that the disc springs 71 are restrained from separating from the concave part 70. Also, as shown in FIG. 4, when the screw shaft 38 is moved to loosen the brake cable 37, the elastic force of the disc springs 71 is applied to the flange part 38a via the retainer 72.

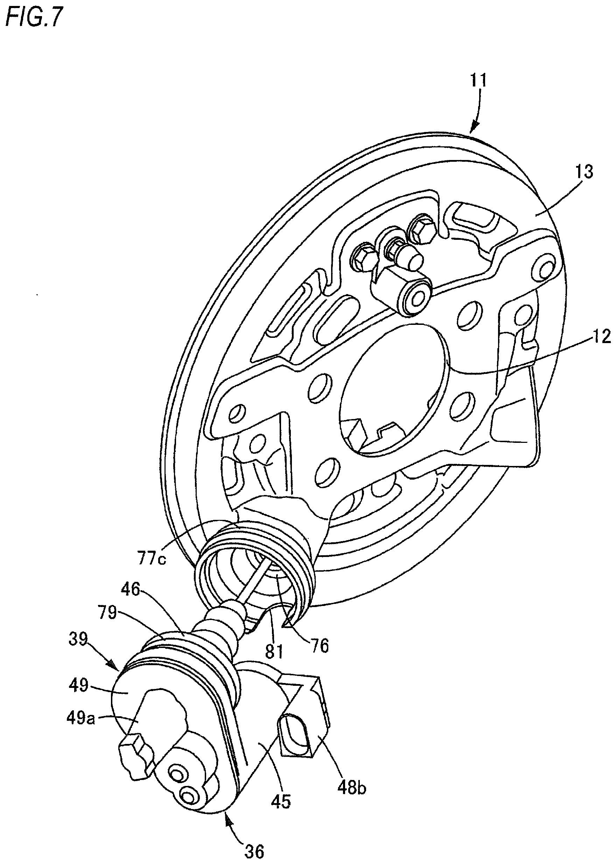

Referring to FIG. 7, a mounting cylinder part 77 extending rearward and inward with respect to a vehicle width direction integrally protrudes from the back plate 13 of the drum brake 11 mounted to the left rear wheel. The mounting cylinder part 77 has a large-diameter cylinder part 77a having one end opening rearward and inward with respect to the vehicle width direction, and a small-diameter cylinder part 77c coaxially continuing to the large-diameter cylinder part 77a via a step portion 77b interposed between the small-diameter cylinder part and the other end of the large-diameter cylinder part 77a. Also, the second cylinder part 46 of the case main body 47 of the actuator case 39 of the electric actuator 36 is inserted in the large-diameter cylinder part 77a and is engaged to the mounting cylinder part 77 with axial movement thereof being restrained in a state where a ring-shaped elastic member 76 made of an elastic material such as rubber or the like is interposed between the second cylinder part and the step portion 77b of the mounting cylinder part 77.

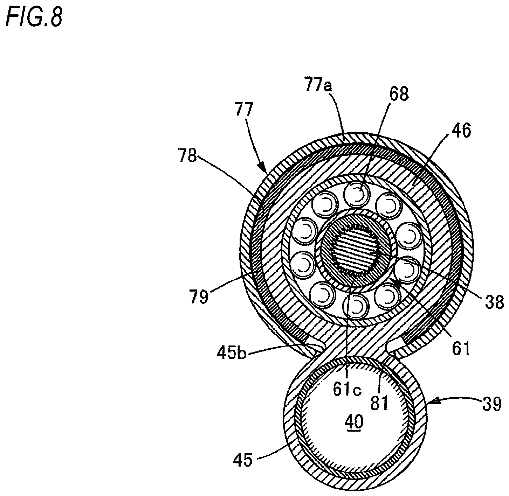

Referring to FIG. 8, in order to prevent the second cylinder part 46 inserted in the mounting cylinder part 77 from axially moving, an inner periphery of the large-diameter cylinder part 77a of the mounting cylinder part 77 is formed with an annular engagement concave part 78, and a C-shaped snap ring 79 is mounted to an outer periphery of the second cylinder part 46 of the actuator case 39. The snap ring 79 is resiliently engaged to the engagement concave part 78, so that the second cylinder part 46 of the case main body 47 of the actuator case 39 is prevented from axially moving to the large-diameter cylinder part 77a of the mounting cylinder part 77.

Further, one of the mounting cylinder part 77 and the actuator case 39, in the illustrative embodiment, the large-diameter cylinder part 77a of the mounting cylinder part 77 is formed with an engagement concave part 81 arranged at one place around a central axis of the mounting cylinder part 77, for example. In the illustrative embodiment, the engagement concave part 81 is formed to penetrate inner and outer surfaces of a peripheral wall of the large-diameter cylinder part 77a and to have a substantially U-shaped sidewall by cutting a circumferential portion of one end opening of the large-diameter cylinder part 77a. In the meantime, the other of the mounting cylinder part 77 and the actuator case 39 is formed with an engagement part 45b to be engaged with the engagement concave part 81. In the illustrative embodiment, a part, which is close to the second cylinder part 46, of a peripheral wall of the first cylinder part 45 of the actuator case 39 is configured to function as the engagement part 45b.

As described above, the actuator case 39 is mounted to the mounting cylinder part 77 of the back plate 13, so that the actuator case 39 is mounted to a rear side of the back plate 13 with respect to a front and rear direction of the vehicle and the connector part 48b faces rearward with respect to the front and rear direction of the vehicle. Also, a bellows-shaped boots 80 configured to cover the protrusion of the screw shaft 38 from the second cylinder part 46 is provided between an outer periphery of the small-diameter cylinder part 46b of the second cylinder part 46 and an outer periphery of one end portion of the screw shaft 38.

Subsequently, operations of the illustrative embodiment are described. The drum brake system 11 can obtain the parking brake state by pulling the brake cable 37 coupled to the parking brake lever 34 with the electric actuator 36, and can favorably control operation and release of the parking brake with the electric actuator 36.

Also, the electric actuator 36 includes the screw shaft 38 coupled to the brake cable 37 continuing to the parking brake lever 34 urged toward the non-operating position, the actuator case 39 configured to support the screw shaft 38 such that the screw shaft 38 is reciprocally moveable in the axis direction while restraining the rotation of the screw shaft 38, the electric motor 40 supported to the actuator case 39 to be rotatable in the forward and backward directions, and the movement conversion mechanism 41 having the nut 61 to be engaged with the screw shaft 38, as one constitutional element, configured to convert the rotary movement to be generated from the electric motor 40 into the linear movement of the screw shaft 38, and accommodated in the actuator case 39 with being provided between the electric motor 40 and the screw shaft 38, and can switch a state in which the brake cable 37 is to be pulled so as to drive the parking brake lever 34 toward the operating position and a state in which the brake cable 37 is to be loosened so as to return the parking brake lever 34 from the operating position to the non-operating position by changing the rotating direction of the electric motor 40. However, the screw shaft 38 is provided with the flange part 38a protruding radially outward, the nut 61 is coaxially formed with the concave part 70 opening toward the flange part 38a, and the disc springs 71, which are interposed between the flange part 38a and the nut 61 and apply the resilient force of urging the flange part 38a in the direction of separating from the nut 61 when moving the screw shaft 38 in the direction in which the brake cable 37 is to be loosened, are accommodated in the concave part 70.

Accordingly, the resilient force of the disc springs 71 is applied to the screw shaft 38 when moving the screw shaft 38 in the direction in which the brake cable 37 is to be loosened, so that it is possible to apply a load to the electric motor 40 upon the return operation. Furthermore, since the disc springs 71 are accommodated in the concave part 70 formed in the nut 61 coaxially with the screw shaft 38, it is not necessary to secure an extra space for arranging therein the disc springs 71, so that it is possible to miniaturize the actuator case 39. Also, since the resilient force of the disc springs 71 is limitedly applied to the actuator case 39 only upon the parking brake, it is not necessary to increase the strength of the actuator case 39 beyond necessity.

Also, since the plurality of stacked disc springs 71 is accommodated in the concave part 70, it is possible to change a resilient load by selecting the number of the disc springs 71, so that it is possible to easily change the specification, in correspondence to a type of the electric actuator 36.

Also, the flange part 38a is formed to protrude radially outward in both directions from the screw shaft 38 along one diameter line of the screw shaft 38, and the actuator case 39 is formed with the pair of locking grooves 73 extending along the axis of the screw shaft 38 and configured to slidably engage the flange part 38a thereto. Therefore, it is possible to restrain the rotation of the screw shaft 38 while allowing the screw shaft 38 to move in the axis direction, so that it is possible to simplify the structure of restraining the rotation of the screw shaft 38.

Also, the actuator case 39 of the electric actuator 36 includes the case main body 47 having the first cylinder part 45 configured to accommodate therein the electric motor 40 for feeding power so as to obtain the parking brake state with a part of the electric motor 40 facing outward, and the first cover member 48 integrally having the cover part 48a configured to join to the first cylinder part 45 with covering the part of the electric motor 40 and the connector part 48b arranged at a side of the first cylinder part 45 and protruding laterally from the cover part 48a with the terminals 55 continuing to the electric motor 40 being arranged thereon, and the first cover member 48 is joined to the first cylinder part 45 so that the circumferential relative position of the connector part 48b to the first cylinder part 45 can be arbitrarily selected at least at the plurality of positions. Therefore, it is not necessary to make the actuator case 39, in conformity to layouts of respective vehicles, and it is possible to easily change a position of the connector part 48b relative to the actuator case 39, so that it is possible to secure the general versatility and to cope with the diverse types of vehicles, thereby suppressing the increase in cost.

Also, since the first cylinder part 45 and the joining part 57 of the cover part 48a are formed to have a circular or regular polygonal cross section, it is possible to increase the degree of freedom of the position of the connector part 48b relative to the actuator case 39, so that it is possible to easily change the direction of the connector part 48b.

Also, since the actuator case 39 of which the connector part 48b faces rearward with respect to the front and rear direction of the vehicle is mounted to the rear side of the back plate 13 of the drum brake 11 of the rear wheel with respect to the front and rear direction of the vehicle, the connector part 48b faces rearward with respect to the front and rear direction of the vehicle, so that it is possible to increase the maintainability of the connector part 48b upon the mounting to the vehicle and to protect the connector part 48b from stones bounding upon traveling of the vehicle.

Also, the first cover member 48 is bonded or welded to the first cylinder part 45. Therefore, when joining the first cover member 48 to the first cylinder part 45, it is possible to securely join the first cover member 48 to the first cylinder part 45 while easily changing the direction of the connector part 48b, without increasing the number of components.

Also, the second cylinder part 46 configuring a part of the actuator case 39 is inserted in the mounting cylinder part 77 provided to the back plate 13 of the drum brake 11 and is engaged to the mounting cylinder part 77 with the axial movement thereof being restrained, one (in the illustrative embodiment, the mounting cylinder part 77) of the mounting cylinder part 77 and the actuator case 39 is formed with the engagement concave part 81 arranged around the central axis of the mounting cylinder part 77, and the engagement part 45b formed at the other (in the illustrative embodiment, the peripheral wall of the first cylinder part 45 of the actuator case 39) of the mounting cylinder part 77 and the actuator case 39 is engaged with the engagement concave part 81. Therefore, it is possible to increase the mountability of the actuator case 39 to the back plate 13 while restraining the axial movement of the actuator case 39 relative to the mounting cylinder part 77 and the rotation of the actuator case 39 relative to the mounting cylinder part 77 by the simple structure with the smaller number of components.

Although the illustrative embodiment of the present invention has been described, the present invention is not limited to the illustrative embodiment and a variety of design changes can be made without departing from the present invention defined in the claims.

For example, in the illustrative embodiment, the engagement concave part 81 formed at the mounting cylinder part 77 and arranged around the central axis of the mounting cylinder part 77 is formed to penetrate the inner and outer surfaces of the large-diameter cylinder part 77a by cutting the circumferential portion of one end opening of the large-diameter cylinder part 77a. However, the engagement concave part may also be formed to have a shape concave outward from the inner peripheral surface of the mounting cylinder part 77. Also, the actuator case 39 may be formed with the engagement concave part, and the mounting cylinder part 77 may be formed with the engagement part.

## Claims

1. An electric parking brake system in which an actuator case (39) of an electric actuator (36) configured to drive a parking brake lever (34) to thereby obtain a parking brake state is mounted to a back plate (13) of a drum brake (11) including the parking brake lever (34),
wherein a cylinder part (46) configuring a part of the actuator case (39) is inserted in a mounting cylinder part (77) provided to the back plate (13) and is engaged to the mounting cylinder part (77) with axial movement thereof being restrained,
**characterized in that**
one of the mounting cylinder part (77) and the actuator case (39) is formed with an engagement concave part (81) arranged around a central axis of the mounting cylinder part (77), and the other of the mounting cylinder part (77) and the actuator case (39) is formed with an engagement part (45b) engaged with the engagement concave part (81).

2. The electric parking brake system according to claim 1, **characterized in that** the mounting cylinder part (77) is formed with the engagement concave part (81), and the actuator case (39) is formed with the engagement part (45b).

3. The electric parking brake system according to claim 1, **characterized in that** the actuator case (39) is formed with the engagement concave part (81), and the mounting cylinder part (77) is formed with the engagement part (45b).

## Patentansprüche

1. Elektrisches Feststellbremssystem, in dem ein Aktorgehäuse (39) eines elektrischen Aktors (36), der konfiguriert ist, einen Feststellbremshebel (34) anzutreiben, um dadurch einen Feststellbremszustand zu erhalten, an einer Rückplatte (13) einer Trommelbremse (11) montiert ist, die den Feststellbremshebel (34) beinhaltet,
wobei ein Zylinderteil (46), das einen Teil des Aktorgehäuses (39) konfiguriert, in ein Montagezylinderteil (77) eingesetzt ist, das an der Rückplatte (13) bereitgestellt ist, und mit dem Montagezylinderteil (77) eingreift, wobei dessen Achsbewegung eingeschränkt ist,
**dadurch gekennzeichnet, dass**
eines des Montagezylinderteils (77) und des Aktorgehäuses (39) mit einem konkaven Eingriffsteil (81) gebildet ist, das um eine Mittelachse des Montagezylinderteils (77) eingerichtet ist, und das andere des Montagezylinderteils (77) und des Aktorgehäuses (39) mit einem Eingriffsteil (45b) gebildet ist, das mit dem konkaven Eingriffsteil (81) eingreift.

2. Elektrisches Feststellbremssystem nach Anspruch 1, **dadurch gekennzeichnet, dass** das Montagezylinderteil (77) mit dem konkaven Eingriffsteil (81) gebildet ist und das Aktorgehäuse (39) mit dem Eingriffsteil (45b) gebildet ist.

3. Elektrisches Feststellbremssystem nach Anspruch 1, **dadurch gekennzeichnet, dass** das Aktorgehäuse (39) mit dem konkaven Eingriffsteil (81) gebildet ist und das Montagezylinderteil (77) mit dem Eingriffsteil (45b) gebildet ist.

## Revendications

1. Système de frein de stationnement électrique dans lequel un boîtier d'actionneur (39) d'un actionneur électrique (36) configuré pour entraîner un levier de frein de stationnement (34) pour ainsi obtenir un état de frein de stationnement est monté sur une plaque arrière (13) d'un frein à tambour (11) incluant le levier de frein de stationnement (34),
dans lequel une partie de cylindre (46) configurant une partie du boîtier d'actionneur (39) est insérée dans une partie de cylindre de montage (77) fournie sur la plaque arrière (13) et est engagée sur la partie de cylindre de montage (77) avec un mouvement axial de celle-ci étant limité,
**caractérisé en ce que**
un de la partie de cylindre de montage (77) et du boîtier d'actionneur (39) est formé avec une partie concave d'engagement (81) agencée autour d'un axe central de la partie de cylindre de montage (77), et l'autre de la partie de cylindre de montage (77) et du boîtier d'actionneur (39) est formé avec une partie d'engagement (45b) engagée avec la partie concave d'engagement (81).

2. Système de frein de stationnement électrique selon la revendication 1, **caractérisé en ce que** la partie de cylindre de montage (77) est formée avec la partie concave d'engagement (81), et le boîtier d'actionneur (39) est formé avec la partie d'engagement (45b).

3. Système de frein de stationnement électrique selon la revendication 1, **caractérisé en ce que** le boîtier d'actionneur (39) est formé avec la partie concave d'engagement (81), et la partie de cylindre de montage (77) est formée avec la partie d'engagement (45b).
